# EUROPEAN PATENT SPECIFICATION

(11) **EP 2 219 331 B1**
(45) Date of publication and mention of the grant of the patent: **15.06.2011**
(21) Application number: 09290075.2
(22) Date of filing: 02.02.2009
(51) Int. Cl.: H04L 12/56, H04W 28/02, H04W 28/10

(54) **Telecommunication method and apparatus thereof**
Telekommunikationsverfahren und Vorrichtung dafür
Procédé de télécommunication et appareil associé

(43) Date of publication of application: 18.08.2010
(73) Proprietor: Alcatel Lucent, 75008 Paris (FR)
(72) Inventor: Mueckenheim, Jens, 90411 Nuremberg (DE); Treillard, Pascal, 91120 Palaiseau (DE)
(74) Representative: Schmidt, Werner Karl

(56) References cited:
- EP-A- 1 370 010
- US-A1- 2006 159 016
- "Universal Mobile Telecommunications System (UMTS); lub/lur congestion control (3GPP TR 25.902 version 6.0.0. Release 6)" 20050901, 1 September 2005 (2005-09-01), pages 1-16, XP014031777

## Description

The present invention relates to a telecommunication method for managing a transmission rate and a communication link of a communication network, to a network access point, to a network controller and to a computer program product.

The term "radio terminal" as used herein refers to any type of fixed or mobile (or portable) communication terminal capable of exchanging data with a radiocommunication network on a radio communication link. Consequently, it may be, among other things, a telephone or desktop computer connected to a local router or server and equipped with a radio communication interface; a mobile telephone; a laptop computer or personal digital assistant (or PDA) equipped with a radio communication interface; a server or local router equipped with a radio communication interface; a high-frequency radio receiver; or a terrestrial or satellite television receiver.

The infrastructure of a cellular network comprises base stations distributed over the territory of coverage so as to communicate with terminals situated in the zones, or cells, that they serve.

Enhanced Dedicated Channel (E-DCH) is a transport uplink channel used by the High-Speed Uplink Packet Access (HSUPA), a third generation mobile communications protocol. The E-DCH intends to improve coverage and user-perceived throughput and to reduce the data transfer delay compared to the Dedicated Channel (DCH). The physical channel is similar to DCH. Further, turbo coding and code multiplexing up to two channelization codes of spreading factor 2 plus two channelization codes of spreading factor 4 are supported, which provide a theoretical maximum data rate of up to 5.7 Mbit/s at the physical layer.

One of the changes with regard to radio resource management for E-DCH compared with previous transmission methods over dedicated channel, is the transition of more responsibility for E-DCH resource management from the radio network controller (RNC) to the network access point (also called Node B) and the radio terminal. The main part of the E-DCH resource management is the E-DCH scheduling, which is distributed between the radio terminal and network access point via a communication link. The radio terminals indicate resource requests by sending scheduling information reports to the network access point. Then, the network access point scheduler uses a given scheduling algorithm and assigns the uplink resources to the different radio terminals by sending scheduling grants providing a maximum amount of uplink resources that the radio terminal can use for the uplink transmission. Fast E-DCH scheduling allows a tighter control of the uplink resources, which allows larger setting of the uplink resource limits, hence increasing user-perceived and aggregated cell throughput for E-DCH.

US 2006/159016 A1 relates to mobile data communications, and more particularly, to regulating uplink communications from mobile radio terminals in a radio access network. Congestion in a radio access network (RAN) associated with transporting uplink information originating from one or more mobile terminals is detected. That detected RAN congestion is reduced using any suitable technique and may be implemented in one or more nodes in the RAN.

"Universal Mobile Telecommunications System (UMTS); lub/lur congestion control (3GPP TR 25.902 version 6.0.0. Release 6)" discloses a technical report which purpose it to help the TSG RAN WG3 group to specify the changes to existing lub/lur specifications, needed for the introduction of "lub/lur Congestion control" measures for Release 6.

According to one broad aspect, the invention proposes a method of managing a transmission rate on a communication link between a radio terminal and a network access point of a communication network, the communication network further comprising a network controller. The network controller is coupled to a core network via an access bearer. The network controller is further coupled to a scheduler. The radio terminal uses a first scheduling grant scheme for the communication link. The method comprises: detecting data traffic congestion on the access bearer between the network controller and the core network by checking if data traffic of the access bearer fulfills a condition. Further, if the condition is fulfilled, generating a second scheduling grant scheme having a smaller number of scheduling grants per time slot of the communication link than the first scheduling grant scheme for the radio terminal. Then, transmitting the second scheduling grant scheme to the radio terminal for replacing the first scheduling grant scheme.

One of the advantages of the embodiment is that they provide a way to reduce or eliminate the data traffic congestion generated by specific radio terminals. In that way, the physical resources are not wasted, as otherwise the packets received from the radio terminals would be dropped in these congestion situations. Further, the embodiments use the existing resources of the communication network, as the network access points are in charge of scheduling the uplink access of the radio terminals. In that way, a change in the grant scheme for a specific radio terminal, reduces or increases its uplink data rate, influencing the overall congestion of the communication network.

In an embodiment, the data traffic congestion is first detected in a radio bearer coupled to the network controller of the communication network, before the data traffic condition is detected in the communication link.

In an embodiment, if the condition is fulfilled, a congestion message is received from the network controller by the network access point, the congestion message being indicative of the radio terminal that generates the data traffic congestion.

In an embodiment, the method further comprises:
- obtaining uplink data transmission rate of the radio terminal by the network controller;
- comparing the uplink data transmission rate with a first threshold; wherein the condition is fulfilled if the uplink threshold is above the first threshold.

In an embodiment, the method further comprises transmitting a second congestion message to the network access point, if the uplink data transmission rate is smaller than the first threshold, wherein the second congestion message indicates that there is no more congestion.

In an embodiment, the method further comprising:
- shaping uplink data transmission from the radio terminal by the network controller using a buffer, wherein the shaping is performed depending on a maximum data rate of the uplink data transmission and/or additional parameters such as bucket size;
- comparing uplink buffer occupancy in the buffer for the radio terminal with a second threshold, wherein the condition is fulfilled if the buffer occupancy is larger than the second threshold.

In an embodiment, the congestion message is a congestion indicator with a specific congestion status information element.

In an embodiment, the uplink data is data related to at least one of: interactive, background, streaming or conversational quality of service traffic. In an embodiment, the network access point is a base station, wherein the network controller is a radio network controller.

In an embodiment, the congestion message further indicates an approximate reduction of the number of scheduling grants per time slot for generating the second scheduling grant scheme.

In an embodiment, the network controller forms part of a radio access network of the communication network, wherein the communication network is a mobile communication network.

In the following preferred embodiments of the invention will be described in greater detail by way of example only making reference to the drawings in which:
- Figure 1: shows an embodiment of a diagram of a method of managing a transmission rate on a communication link,
- Figure 2: shows an embodiment of a communication network,
- Figure 3: shows an embodiment of a method of managing a transmission rate on a communication link,
- Figure 4: shows a block diagram of a communication network.

The word "exemplary" is used exclusively herein to mean "serving as an example, instance, or illustration." Any embodiment described herein as "exemplary" is not necessarily to be construed as preferred or advantageous over other embodiments. Note that the exemplary embodiments are provided as an exemplar throughout this discussion; however, alternate embodiments may incorporate various aspects without departing from the scope of the present invention.

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

Moreover, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In the present description, the invention will be described more particularly in its application, non limiting, to third generation radio communication networks of the UMTS type which provides data communication according to the HSUPA service, without thereby restricting the generality of its subject matter.

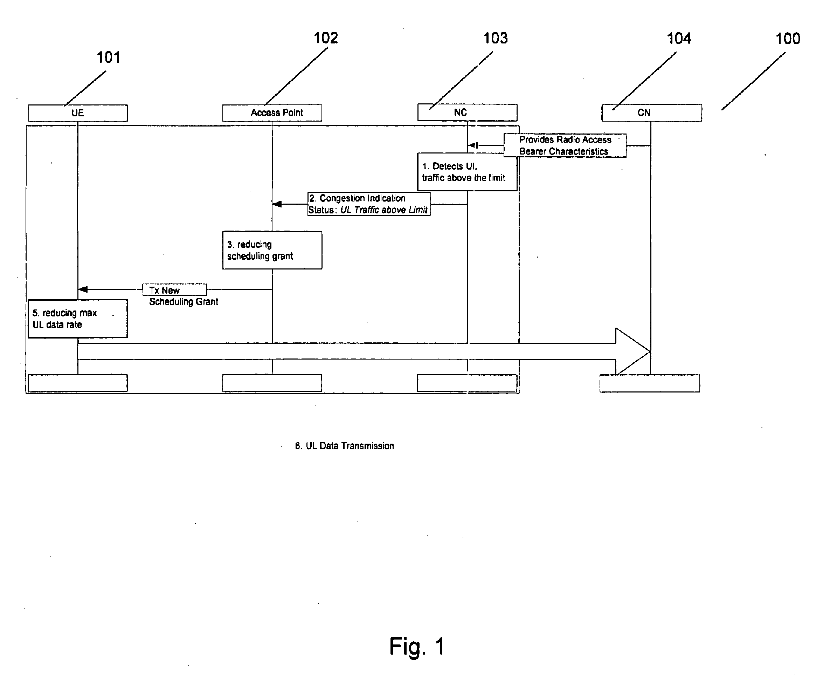

Fig. 1 shows a diagram 100 of a method of managing a transmission rate on a communication link between a radio terminal 101 and a network access point 102 of a mobile communication network. The communication network includes a high speed uplink packet access. The network access point 102 includes, or is coupled to, a scheduler. The communication network further comprises a network controller 103, which is connected to a Core Network 104 via an access bearer. The network controller 103 is in particular managing the data exchanged between radio terminal and the Core Network, by setting up the configuration according to the available resources, and checking the data rates. The radio terminal uses a first scheduling grant scheme for the communication link with the network access point 102, as dictated by the network access point 102.

During the data transmission from the radio terminal 101 to the core network 104, the network controller 103 detects data traffic congestion on the access bearer between the network controller 103 and the core network 104. The detection of the data traffic congestion is possible by verifying if the data traffic of the communication link fulfils the condition established by the network controller 103. The condition may correspond to a comparison of the uplink throughput with a predefined threshold set by the Core Network 104.

After the radio network controller 103 detects the data traffic congestion, it notifies the network access point 102 about the congestion of the communication link. The notification may be sent through a congestion indication message that includes a flag with the status "uplink traffic above threshold". The congestion indication message may correspond to E-DCH maximum bit rate information element. The reception of the congestion indication message by the network access point 102, indicates that the condition has been fulfilled. Then, the network access point 102 proceeds to generate a second scheduling grant scheme.

The second scheduling grant scheme has a smaller number of scheduling grants per time slot of the communication link than the first scheduling grant scheme for the radio terminal 101. As a consequence, the uplink data rate of the radio terminal is reduced and allows minimizing or eliminating the data traffic congestion of the communication network. After the network access point 102 generates the second scheduling grant scheme, the network access point 102 transmits the second scheduling grant scheme to the radio terminal 101 where it will replace the first scheduling grant scheme.

The network controller 103 may communicate in the congestion indication message, the exact values for reducing the uplink data transmission rate of the radio terminal. Alternatively, the network controller 103 may communicate to the network access point 102 that there is data traffic congestion without giving any exact values, commanding the network access point 102 to reduce the scheduling grants per time slot for the radio terminal 101. Further, the condition established by the network controller 103, which indicates if data traffic congestion is occurring in the communication network, may correspond to a comparison between the actual uplink throughput and the maximum bit rate (that may include a safety margin). The maximum bit rate is received from the core network 104 coupled to the network controller and is defined per radio access bearer.

After the congestion in the communication link has been eliminated, the radio network controller 103 may transmit a second condition message to the network access point 102, when the uplink data transmission rate is smaller than the first threshold, indicating to the network access point 102 that there is no more congestion.

In an alternative, the network controller 103 may shape the uplink data transmission coming from the radio terminal 101 by using a buffer. The shaping is performed depending on a maximum data rate of the uplink data transmission, and possibly additional parameters such as bucket size. The condition that identifies if data congestion is present on the communication network can be related to the buffer. In that case, the uplink buffer occupancy in the buffer may be compared with a second threshold and the condition will be fulfilled if the buffer occupancy is larger than this second threshold. The comparison of the uplink buffer occupancy corresponds to an alternative step to detect data traffic congestion.

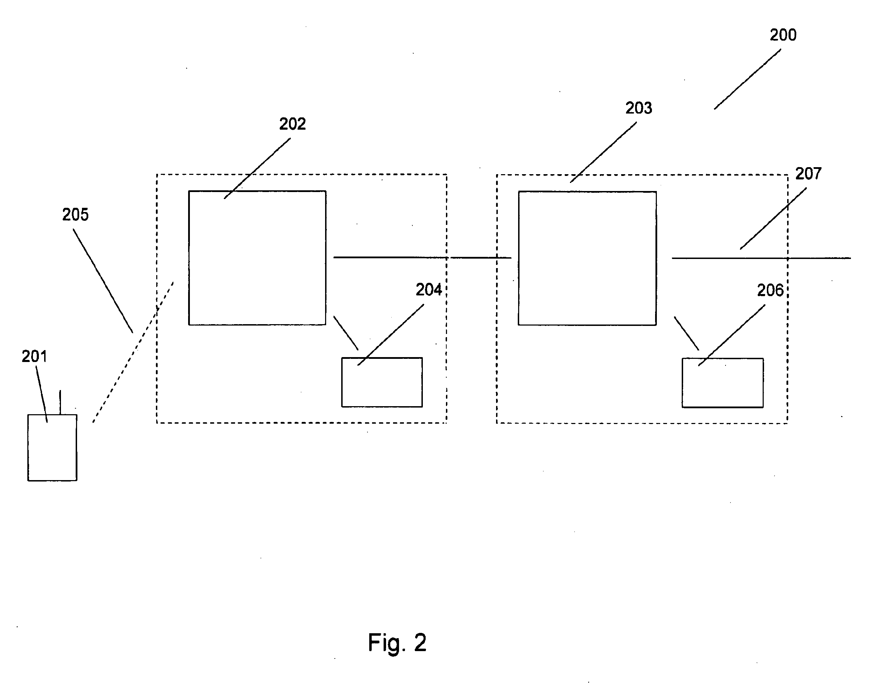

Fig. 2 shows a block diagram of a communication network 200 comprising a radio terminal 201, a network access point 202 and a network controller 203. A communication link 205 is present between the radio terminal 201 and the network access point 202. The network controller 203 may include or be coupled to a shaper 206, for the uplink traffic to a Core Network. The network controller 203 is coupled to the core network via an access bearer 207. The radio terminal 201 uses a first scheduling grant scheme for transmitting the data via the communication link 205. The Access Point 202 includes or is coupled to a scheduler 204, in charge of generating the grants to the radio terminal 201.

During normal functioning of the transmission of data from the radio terminal 201 to the network access point 202, the radio network controller 203 may detect that the uplink traffic in the access bearer 207, which connects the network controller 203 with the core network, is above a certain threshold and decides to reduce the uplink data rate below the maximum bit rate level. The detection of data traffic congestion may result in a comparison of the actual uplink throughput to a threshold. The threshold is selected according to the maximum bit rate and a safety margin. A data traffic condition can then be fulfilled when the uplink throughput in said access bearer 207 is bigger than the maximum bit rate minus a safety margin.

Subsequently, the radio network controller 203 sends a congestion indication message to the network access point 202 indicating in a congestion status that the uplink traffic is above a limit and indicating what radio terminal is the cause of the congestion. The network access point 202 receives the congestion indication message and generates a second scheduling grant scheme with a reduced number of scheduling grants per time slot for the radio terminal. As a result, the uplink data transmission rate coming from the radio terminal 201 is reduced.

The network access point 202 may send an absolute grant indication, which indicates an exact data rate value to obtain on an absolute grant channel. Alternatively, the network access point 202 may transmit a relative grant message on a relative grant channel, which commands a reduction of said uplink data rate without providing specific values. After the radio terminal 201 receives the second scheduling grant scheme, the radio terminal 201 reduces the maximum uplink data rate according to the new grant scheme. As a consequence, the radio terminal 201 will send the uplink data on the communication link 205 with a reduced data rate.

When the congestion has disappeared, an indication of de-congestion is initiated by sending another congestion indication message with a congestion status set to no congestion. This transmission of the congestion indication message indicating no congestion may occur when the actual throughput of the uplink data goes below a maximum bit rate and no existing congestion situation occurs. The congestion message may correspond to an E-DCH maximum bit rate information element. The communication link may correspond to an uplink packet data access link. Further, the uplink data may be data related to at least one of interactive, background, streaming or conversational quality of service traffic.

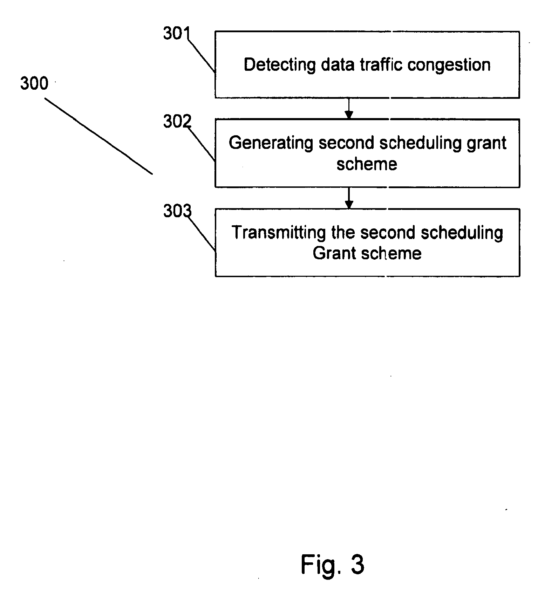

Fig. 3 shows a flow diagram 300 of a method of managing transmission rate on a communication link between a radio terminal and a network access point of a communication network. The communication network further comprises a network controller coupled to a scheduler. The network controller is coupled to a core network via an access bearer.

In a first step 301, data traffic congestion is detected by checking if data traffic of the access bearer fulfils a condition established by the network controller. In a second step 302 a second scheduling grants scheme is generated if the condition is fulfilled. The second scheduling grant scheme has a smaller number of scheduling grants per time slot of the communication link than the first scheduling grant scheme for the radio terminal. In a third step 301, the second scheduling grant scheme is transmitted to the radio terminal for replacement of the first scheduling grant scheme.

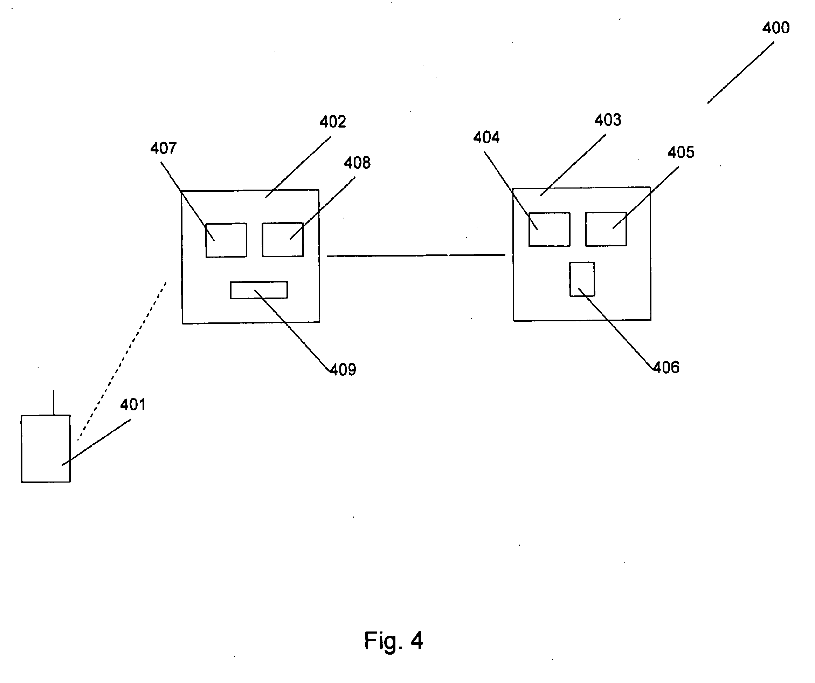

Fig. 4 shows a block diagram 400 of a communication network comprising a radio terminal 401, a communication link between the radio terminal 401 and a network access point 402. The network access point is coupled to a network controller 403. The network controller 403 comprises:
- A module 404 for detecting data traffic congestion on the access bearer between the network controller and the core network of the communication network. The data traffic congestion includes the uplink traffic coming from the radio terminal and the network access point;
- A module 405 for verifying if an uplink data transmission of the radio terminal fulfils a condition established by the network controller. The condition can be an uplink threshold above a predefined value, or a buffer occupancy being larger than a second predefined value;
- A module 406 for transmitting a congestion message to the network access point 402, if the condition is fulfilled. The congestion message is indicative of the radio terminal that generates the data traffic congestion. The congestion message triggers in the network access point 402 the generation of a second grant scheme with reduce uplink time slots for the radio terminal 401.

Further, the network access point 402 comprises:
- A module 407 for receiving a congestion message. This congestion message is indicative of the radio terminal that generates the data traffic congestion, and indicates that the uplink traffic is above a threshold
- A scheduler 408 for generating a second scheduling grant scheme responsive to the congestion message. The second scheduling grant scheme has a smaller number of scheduling grants per time slot of a communication link than the first scheduling grant scheme that the radio terminal was previously using.
- A module 409 for transmitting the second scheduling grant scheme to the radio terminal for replacing the first scheduling grant scheme. After reception of the second scheduling grant scheme by the radio terminal, the uplink data rate of the radio terminal will be reduced, and therefore the data traffic congestion in the access bearer that connects the network controller with the core network will be reduced or eliminated.

### List of reference numerals

| | |
|---|---|
| 100 | Diagram |
| 101 | Radio terminal |
| 102 | Network access point |
| 103 | Network controller |
| 104 | Core Network |
| 200 | Block diagram |
| 201 | Radio terminal |
| 202 | Network access point |
| 203 | Network controller |
| 204 | Scheduler |
| 205 | Communication link |
| 206 | Shaper |
| 300 | Flow diagram |
| 301 | First step |
| 302 | Second step |
| 303 | Third step |
| 400 | Block diagram |
| 401 | Radio terminal |
| 402 | Network access point |
| 403 | Radio network controller |
| 404 | Modules |
| 405 | Module |
| 406 | Module |
| 407 | Module |
| 408 | Module |
| 409 | Module |

## Claims

1. A method of managing a transmission rate on a communication link (205) between a radio terminal (101; 201; 401) and a network access point (102; 202; 402) of a communication network, said communication network further comprising a network controller (103; 203; 403), said network controller (103; 203; 403) being coupled to a scheduler (204), said network controller (103; 203; 403) being coupled to a core network (104) via an access bearer, said radio terminal (101; 201; 401) using a first scheduling grant scheme for said communication link (205), the method being **characterized by** comprising the steps of:
- detecting data traffic congestion on said access bearer by checking if data traffic of said access bearer fulfills a condition;
- if said condition is fulfilled, generating a second scheduling grant scheme having a smaller number of scheduling grants per time slot of said communication link (205) than said first scheduling grant scheme for said radio terminal;
- transmitting said second scheduling grant scheme to said radio terminal (101; 201; 401) for replacing the first scheduling grant scheme.

2. The method of claim 1, wherein said data traffic congestion is first detected in a radio bearer coupled to said network controller (103; 203; 403) of said communication network, before said data traffic condition is detected in said communication link (205).

3. The method of claim 1, wherein if said condition is fulfilled, a congestion message is received from said network controller (103; 203; 403) by said network access point (102; 202; 402), said congestion message being indicative of said radio terminal that generates said data traffic congestion.

4. The method of claim 1, wherein the method further comprises:
- obtaining uplink data transmission rate of said radio terminal (101; 201; 401) by the network controller (103; 203; 403);
- comparing said uplink data transmission rate with a first threshold;
wherein said condition is fulfilled if said uplink threshold is above said first threshold.

5. The method of claim 4, further comprising transmitting a second congestion message to said network access point (102; 202; 402), if said uplink data transmission rate is smaller than said first threshold, wherein said second congestion message indicates that there is no more congestion.

6. The method of claim 1 further comprising:
- shaping uplink data transmission from said radio terminal (101; 201; 401) by said network controller (103; 203; 403) using a buffer, wherein the shaping is performed depending on a maximum data rate of said uplink data transmission;
- comparing uplink buffer occupancy in said buffer for said radio terminal (101; 201; 401) with a second threshold, wherein said condition is fulfilled if said buffer occupancy is larger than said second threshold.

7. The method of claim 3, wherein said congestion message is a congestion indicator with a specific congestion status information element and/or wherein said communication link (205) is an uplink packet data access link.

8. The method of claim 1, wherein the uplink data is data related to at least one of:
interactive, background, streaming or conversational quality of service traffic and/or wherein said network access point (102; 202; 402) is a base station, wherein said network controller (103; 203; 403) is a radio network controller (103; 203; 403).

9. The method of any of the preceding claims, wherein said congestion message further indicates an approximate reduction of the number of scheduling grants per time slot for generating said second scheduling grant scheme.

10. The method of any of the preceding claims, wherein said network controller (103; 203; 403) forms part of a radio access network of said communication network, wherein said communication network is a mobile communication network.

11. A network access point (102; 202; 402) for a communication network comprising a communication link (205) between a radio terminal (101; 201; 401) and said network access point (102; 202; 402), said communication network further comprising a network controller (103; 203; 403), said network controller (103; 203; 403) being coupled to a scheduler (204), said network controller (103; 203; 403) being coupled to a core network (104) via an access bearer, said radio terminal (101; 201; 401) being adapted for using a first scheduling grant scheme for said communication link (205), said network access point (102; 202; 402) being **characterized by** comprising:
- means for receiving a congestion message, said congestion message being indicative of said radio terminal that generates a data traffic congestion;
- scheduling means for generating a second scheduling grant scheme responsive to said congestion message, said second scheduling grant scheme having a smaller number of scheduling grants per time slot of a communication link (205) than said first scheduling grant scheme for said radio terminal;
- means for transmitting said second scheduling grant scheme to said radio terminal (101; 201; 401) for replacing the first scheduling grant scheme.

12. A network controller (103; 203; 403) for a communication network adapted for controlling at least one network access point (102; 202; 402) of said communication network, wherein the at least one network access point (102; 202; 402) is adapted for establishing a communication link (205) with a radio terminal (101; 201; 401), the network controller (103; 203; 403) being **characterized by** comprising:
- means for detecting data traffic congestion on an access bearer between said network controller (103; 203; 403) and said core network (104) by checking if data traffic of said access bearer fulfills a condition;
- means for transmitting a congestion message to said network access point (102; 202; 402) if said condition is fulfilled, wherein said congestion message is indicative of said radio terminal that generates said data traffic congestion.

13. A mobile communication network comprising a communication link (205) between a radio terminal (101;201;401), a network access point (102;202;402) and a network controller (103; 203;403), said network controller (103;203;403) being coupled to a schedule (204), said network controller being coupled to a core network (104) via an access bearer, the mobile communication network being operable to perform all the steps of the method in accordance with any one of the preceding claims 1 to 10.

14. A computer program product stored on a storage medium, comprising instructions for execution by a network access point (102; 202; 402) of a communication network, said network access point (102; 202; 402) being adapted for establishing a communication link (205) with a radio terminal (101; 201; 401), said radio terminal (101; 201; 401) being adapted for using a first scheduling grant scheme for said communication link (205), **characterized by** instructions for performing the following steps :
- receiving a congestion message, said congestion message being indicative of said radio terminal that generates said data traffic congestion;
- generating a second scheduling grant scheme responsive to said congestion message, said second scheduling grant scheme having a smaller number of scheduling grants per time slot of a communication link (205) than a first scheduling grant scheme for said radio terminal (101; 201; 401);
- transmitting said second scheduling grant scheme to said radio terminal (101; 201; 401) for replacing the first scheduling grant scheme.

15. A computer program product stored on a storage medium, comprising instructions for execution by a network controller (103; 203; 403) of a communication network, said network controller (103; 203; 403) being coupled to a core network (104) via an access bearer, said network controller (103; 203; 403) being adapted for controlling at least a network access point (102; 202; 402), said network access point (102; 202; 402) being adapted to establish a communication link (205) with a radio terminal (101; 201; 401) **characterized by** instructions for performing the following steps :
- detecting data traffic congestion on said access bearer between said network controller (103; 203; 403) and said core network (104) by checking if data traffic of said access bearer fulfills a condition;
- transmitting a congestion message to said network access point (102; 202; 402) if said condition is fulfilled, wherein said congestion message is indicative of said radio terminal (101; 201; 401) that generates said data traffic congestion.

## Patentansprüche

1. Verfahren zum Verwalten einer Übertragungsrate auf einer Kommunikationsverbindung (205) zwischen einem Funkendgerät (101; 201; 401) und einem Netzwerkzugangspunkt (102; 202; 402) eines Kommunikationsnetzwerkes, wobei das besagte Kommunikationsnetzwerk weiterhin einen Netzwerkcontroller (103; 203; 403) aufweist, wobei der besagte Netzwerkcontroller (103; 203; 403) mit einem Scheduler (204) gekoppelt ist, wobei der Netzwerkcontroller (103; 203; 403) mit einem Kernnetzwerk (104) über einen Zugangsträger gekoppelt ist, wobei das besagte Funkendgerät (101; 201; 401) ein erstes Zeitplanungsgewährungsschema für die besagte Kommunikationsverbindung (205) verwendet, Verfahren **dadurch gekennzeichnet, dass** es die folgenden Schritte aufweist:
- Erfassen eines Datenverkehrsstaus auf dem besagten Zugangsträger durch Prüfen, ob der Datenverkehr des Zugangsträgers eine Bedingung erfüllt;
- wenn die besagte Bedingung erfüllt wird, Erzeugen eines zweiten Zeitplanungsgewährungsschemas, das eine kleinere Anzahl von Zeitplanungsgewährungen pro Zeitfenster der besagten Kommunikationsverbindung (205) hat als das besagte erste Zeitplanungsgewährungsschema für das besagte Funkendgerät;
- Übertragen des zweiten besagten Zeitplanungsgewährungsschemas an das besagte Funkendgerät (101; 201; 401), um das erste Zeitplanungsgewährungsschema zu ersetzen.

2. Verfahren nach Anspruch 1, wobei der besagte Datenverkehrsstau zuerst in einem Funkträger erfasst wird, der mit dem Netzwerkcontroller (103; 203; 403) des besagten Kommunikationsnetzwerkes gekoppelt ist, bevor der besagte Datenverkehrzustand in der besagten Kommunikationsverbindung (205) erfasst wird.

3. Verfahren nach Anspruch 1, wobei, wenn die besagte Bedingung erfüllt ist, eine Staumeldung von dem besagten Netzwerkcontroller (103; 203; 403) her durch den besagten Netzwerkzugangspunkt (102; 202; 402) empfangen wird, wobei die besagte Staumeldung das besagte Funkendgerät anzeigt, das den besagten Datenverkehrsstau erzeugt.

4. Das Verfahren nach Anspruch 1, wobei das Verfahren weiterhin umfasst:
- Erhalten der Aufwärtsdatenübertragungsrate des besagten Funkendgeräts (101; 201; 401) durch den Netzwerkcontroller (103; 203; 403);
- Vergleichen der besagten Aufwärtsdatenübertragungsrate mit einem ersten Schwellenwert, wobei die Bedingung erfüllt ist, wenn der besagte Aufwärtsschwellenwert oberhalb des besagten ersten Schwellenwerts liegt.

5. Verfahren nach Anspruch 4, das weiterhin das Übertragen einer zweiten Staumeldung zu dem besagten Netzwerkzugangspunkt (102; 202; 402) aufweist, wenn die besagte Aufwärtsdatenübertragungsrate kleiner ist als der besagte erste Schwellenwert, wobei die besagte zweite Staumeldung anzeigt, dass kein Stau mehr vorliegt.

6. Verfahren nach Anspruch 1, weiterhin umfassend:
- Formen der Aufwärtsdatenübertragung von dem besagten Funkendgerät (101; 201; 401) durch den besagten Netzwerkcontroller (103; 203; 403) unter Einsatz eines Pufferspeichers, wobei das Formen in Abhängigkeit von einer maximalen Datenrate der besagten Aufwärtsdatenübertragung ausgeführt wird.
- Vergleichen der Aufwärts-Pufferspeicherbelegung in dem besagten Pufferspeicher für das besagte Funkendgerät (101; 201; 401) mit einem zweiten Schwellenwert, wobei die besagte Bedingung erfüllt ist, wenn die besagte Pufferspeicherbelegung größer ist als der besagte zweite Schwellenwert.

7. Verfahren nach Anspruch 3, wobei die besagte Staumeldung eine Stauanzeige mit einem spezifischen Stauzustandsinformationselement ist und/oder wobei die besagte Kommunikationsverbindung (205) eine Aufwärts-Paketdatenzugangsverbindung ist.

8. Verfahren nach Anspruch 1, wobei die Aufwärtsdaten Daten sind, die mit mindestens einem der folgenden Elemente zusammenhängen: Interaktiv-, Hintergrund-, Streaming- oder Konversationsqualität des Dienstverkehrs und/oder wobei der besagte Netzwerkzugangspunkt (102; 202; 402) eine Basisstation ist, wobei der besagte Netzwerkcontroller (103; 203; 403) ein Funknetzwerkcontroller (103; 203; 403) ist.

9. Verfahren nach einem beliebigen der vorstehenden Ansprüche, wobei die besagte Staumeldung weiterhin eine ungefähre Verringerung der Anzahl von Zeitplanungsgenehmigungen pro Zeitfenster zum Erzeugen des besagten zweiten Zeitplanungsgenehmigungsschemas anzeigt.

10. Verfahren nach einem beliebigen der vorstehenden Ansprüche, wobei der besagte Netzwerkcontroller (103; 203; 403) Teil eines Funkzugangsnetzwerks des besagten Kommunikationsnetzwerkes ist, wobei das besagte Kommunikationsnetzwerk ein Mobilkommunikationsnetzwerk ist.

11. Netzwerkzugangspunkt (102; 202; 402) für ein Kommunikationsnetzwerk, das eine Kommunikationsverbindung (205) zwischen einem Funkendgerät (101; 201; 401) und dem besagten Netzwerkzugangspunkt (102; 202; 402) aufweist, wobei das besagte Kommunikationsnetzwerk weiterhin einen Netzwerkcontroller (103; 203; 403) aufweist, wobei der besagte Netzwerkcontroller (103; 203; 403) mit einem Scheduler (204) gekoppelt ist, wobei der besagte Netzwerkcontroller (103; 203; 403) mit einem Kernnetzwerk (104) über einen Zugangsträger gekoppelt ist, wobei das besagte Funkendgerät (101; 201; 401) ein erstes Zeitplanungsgewährungsschema für die besagte Kommunikationsverbindung (205) verwenden kann, wobei der besagte Netzwerkzugangspunkt (102; 202; 402) **dadurch gekennzeichnet ist, dass** er Folgendes aufweist:
- Mittel zum Empfangen einer Staumeldung, wobei die besagte Staumeldung das besagte Funkendgerät anzeigt, das einen Datenverkehrsstau erzeugt;
- Zeitplanungsmittel zum Erzeugen eines zweiten Zeitplanungsgewährungsschemas als Reaktion auf die besagte Staumeldung, wobei das besagte zweite Zeitplanungsgewährungsschema eine kleinere Anzahl von Zeitplanungsgewährungen pro Zeitfenster einer Kommunikationsverbindung (205) hat als das besagte erste Zeitplanungsgewährungsschema für das besagte Funkendgerät;
- Mittel zum Übertragen des besagten zweiten Zeitplanungsgewährungsschemas an das besagte Funkendgerät (101; 201; 401), zum Ersetzen des ersten Zeitplanungsgewährungsschemas.

12. Netzwerkcontroller (103; 203; 403) für ein Kommunikationsnetzwerk, der mindestens einen Netzwerkzugangspunkt (102; 202; 402) des besagten Kommunikationsnetzwerkes steuern kann, wobei der mindestens eine Netzwerkzugangspunkt (102; 202; 402) eine Kommunikationsverbindung (205) mit einem Funkendgerät (101; 201; 401) aufbauen kann, wobei der Netzwerkcontroller (103; 203; 403) **dadurch gekennzeichnet ist, dass** er Folgendes aufweist:
- Mittel zum Erfassen eines Datenverkehrsstaus auf einem Zugangsträger zwischen dem besagten Netzwerkcontroller (103; 203; 403) und dem besagten Kernnetzwerk (104) durch Prüfen, ob der Datenverkehr des besagten Zugangsträgers eine Bedingung erfüllt;
- Mittel zum Übertragen einer Staumeldung an den besagten Netzwerkzugangspunkt (102; 202; 402), wenn die besagte Bedingung erfüllt ist, wobei die besagte Staumeldung das besagte Funkendgerät, das den besagten Datenverkehrsstau erzeugt, angibt.

13. Mobilkommunikationsnetzwerk mit einer Kommunikationsverbindung (205) zwischen einem Fundendgerät (101, 201, 401), einem Netzwerkzugangspunkt (102, 202, 402) und einem Netzwerkcontroller (103, 203, 403), wobei der besagte Netzwerkcontroller (103, 203, 403) mit einem Scheduler (204) gekoppelt ist, wobei der besagte Netzwerkcontroller mit einem Kernnetzwerk (104) über einen Zugangsträger gekoppelt ist, wobei das mobile Kommunikationsnetzwerk betrieben werden kann, um alle Schritte des Verfahrens nach beliebigen der vorstehenden Ansprüche 1 bis 10 auszuführen.

14. Computerprogrammprodukt, das auf einem Speichermedium gespeichert ist, das Anweisungen für das Ausführen durch einen Netzwerkzugangspunkt (102; 202; 402) eines Kommunikationsnetzwerks aufweist, wobei der besagte Netzwerkzugangspunkt (102; 202; 402) eine Kommunikationsverbindung (205) mit einem Funkendgerät (101; 201, 401) aufbauen kann, wobei das besagte Funkendgerät (101; 201; 401) ein erstes Zeitplanungsgewährungsschema für die besagte Kommunikationsverbindung (205) verwenden kann, **gekennzeichnet durch** Anweisungen zum Ausführen der folgenden Schritte:
- Empfangen einer Staumeldung, wobei die besagte Staumeldung das besagte Funkendgerät, das den besagten Datenverkehrsstau erzeugt, anzeigt;
- Erzeugen eines zweiten Zeitplanungsgewährungsschemas als Reaktion auf die besagte Staumeldung, wobei das besagte zweite Zeitplanungsgewährungsschema eine kleinere Anzahl von Zeitplanungsgewährungen pro Zeitfenster einer Kommunikationsverbindung (205) hat als ein erstes Zeitplanungsgewährungsschema für das besagte Funkendgerät (101; 201; 401);
- Übertragen des besagten zweiten Zeitplanungsgewährungsschemas an das besagte Funkendgerät (101; 201; 401), um das erste Zeitplanungsgewährungsschema zu ersetzen.

15. Computerprogrammprodukt, das auf einem Speicherträger gespeichert ist, das Anweisungen für die Ausführung durch einen Netzwerkcontroller (103; 203; 403) eines Kommunikationsnetzwerks enthält, wobei der besagte Netzwerkcontroller (103; 203; 403) mit einem Kernnetzwerk (104) über einen Zugangsträger gekoppelt ist, wobei der besagte Netzwerkcontroller (103; 203; 403) mindestens einen Netzwerkzugangspunkt (102; 202; 402) steuern kann, wobei der besagte Netzwerkzugangspunkt (102; 202; 402) eine Kommunikationsverbindung (205) mit einem Funkendgerät (101; 201; 401) aufbauen kann, **gekennzeichnet durch** Anweisungen zum Ausführen der folgenden Schritte:
- Erfassen eines Datenverkehrsstaus auf dem besagten Zugangsträger zwischen dem besagten Netzwerkcontroller (103; 203; 403) und dem besagten Kernnetzwerk (104) **durch** Prüfen, ob der Datenverkehr des besagten Zugangsträgers eine Bedingung erfüllt;
- Übertragen einer Staumeldung an den besagten Netzwerkzugangspunkt (102; 202; 402), wenn die Bedingung erfüllt ist, wobei die besagte Staumeldung das besagte Funkendgerät (101; 201; 401), das den besagten Datenverkehrsstau erzeugt, angibt.

## Revendications

1. Procédé de gestion d'un débit de transmission sur une liaison de communication (205) entre un terminal radio (101 ; 201 ; 401) et un point d'accès au réseau (102 ; 202; 402) d'un réseau de communication, ledit réseau de communication comprenant en outre un contrôleur de réseau (103 ; 203 ; 403), ledit contrôleur de réseau (103 ; 203 ; 403) étant couplé à un dispositif de planification (204), ledit contrôleur de réseau (103 ; 203 ; 403) étant couplé à un coeur de réseau (104) par l'intermédiaire d'un support d'accès, ledit terminal radio (101 ; 201 ; 401) utilisant un premier schéma d'autorisation de planification pour ladite liaison de communication (205), le procédé étant **caractérisé en ce qu'**il comprend les étapes suivantes :
• détecter un encombrement du trafic de données sur ledit support d'accès en vérifiant si le trafic de données dudit support d'accès remplit une condition;
• si ladite condition est remplie, générer un deuxième schéma d'autorisation de planification présentant un nombre inférieur d'autorisations de planification par créneau temporel de ladite liaison de communication (205) par rapport audit premier schéma d'autorisation de planification pour ledit terminal radio ;
• transmettre ledit deuxième schéma d'autorisation de planification audit terminal radio (101 ; 201 ; 401) pour remplacer le premier schéma d'autorisation de planification.

2. Procédé selon la revendication 1, dans lequel ledit encombrement du trafic de données est d'abord détecté dans un support radio couplé audit contrôleur de réseau (103 ; 203 ; 403) dudit réseau de communication, avant que ladite condition du trafic de données soit détectée dans ladite liaison de communication (205).

3. Procédé selon la revendication 1, dans lequel, si ladite condition est remplie, un message d'encombrement est reçu à partir dudit contrôleur de réseau (103 ; 203 ; 403) par ledit point d'accès au réseau (102 ; 202 ; 402), ledit message d'encombrement indiquant ledit terminal radio qui génère ledit encombrement du trafic de données.

4. Procédé selon la revendication 1, dans lequel le procédé comprend en outre les étapes suivantes :
• obtenir un débit de transmission de données en liaison montante dudit terminal radio (101 ; 201 ; 401) par le contrôleur de réseau (103 ; 203 ; 403) ;
• comparer ledit débit de transmission de données en liaison montante à un premier seuil ;
dans lequel ladite condition est remplie si ledit seuil en liaison montante est supérieur audit premier seuil.

5. Procédé selon la revendication 4, comprenant en outre la transmission d'un deuxième message d'encombrement audit point d'accès au réseau (102 ; 202 ; 402), si ledit débit de transmission de données en liaison montante est inférieur audit premier seuil, dans lequel ledit deuxième message d'encombrement indique qu'il n'y a plus d'encombrement.

6. Procédé selon la revendication 1 comprenant en outre les étapes suivantes:
• mettre en forme une transmission de données en liaison montante provenant dudit terminal radio (101 ; 201 ; 401) au moyen dudit contrôleur de réseau (103 ; 203 ; 403) en utilisant un tampon, dans lequel la mise en forme est réalisée en fonction d'un débit de données maximum de ladite transmission de données en liaison montante ;
• comparer l'occupation du tampon en liaison montante dans ledit tampon pour ledit terminal radio (101 ; 201 ; 401) à un deuxième seuil, dans lequel ladite condition est remplie si ladite occupation du tampon est plus importante que ledit deuxième seuil.

7. Procédé selon la revendication 3, dans lequel ledit message d'encombrement est un indicateur d'encombrement avec un élément d'information de l'état d'encombrement spécifique et/ou dans lequel ladite liaison de communication (205) est une liaison d'accès par paquets de données en liaison montante.

8. Procédé selon la revendication 1, dans lequel les données en liaison montante sont des données relatives à au moins une classe de service parmi : qualité de trafic « Interactive » (interactif), « Background » (d'arrière-plan), « Streaming » (à flux continu) ou « Conversational » (conversationnel) et/ou dans lequel ledit point d'accès au réseau (102 ; 202 ; 402) est une station de base, dans lequel ledit contrôleur de réseau (103 ; 203 ; 403) est un contrôleur de réseau radio (103 ; 203 ; 403).

9. Procédé selon l'une quelconque des revendications précédentes, dans lequel ledit message d'encombrement indique en outre une réduction approximative du nombre d'autorisations de planification par créneau temporel pour générer ledit deuxième schéma d'autorisation de planification.

10. Procédé selon l'une quelconque des revendications précédentes, dans lequel ledit contrôleur de réseau (103 ; 203 ; 403) fait partie d'un réseau d'accès radio dudit réseau de communication, dans lequel ledit réseau de communication est un réseau de communication mobile.

11. Point d'accès au réseau (102 ; 202 ; 402) pour un réseau de communication comprenant une liaison de communication (205) entre un terminal radio (101 ; 201 ; 401) et ledit point d'accès au réseau (102 ; 202 ; 402), ledit réseau de communication comprenant en outre un contrôleur de réseau (103 ; 203 ; 403), ledit contrôleur de réseau (103 ; 203; 403) étant couplé à un dispositif de planification (204), ledit contrôleur de réseau (103 ; 203 ; 403) étant couplé à un coeur de réseau (104) par l'intermédiaire d'un support d'accès, ledit terminal radio (101 ; 201 ; 401) étant adapté pour utiliser un premier schéma d'autorisation de planification pour ladite liaison de communication (205), ledit point d'accès au réseau (102 ; 202 ; 402) étant **caractérisé en ce qu'**il comprend :
• moyens pour recevoir un message d'encombrement, ledit message d'encombrement indiquant ledit terminal radio qui génère un encombrement du trafic de données ;
• moyens de planification pour générer un deuxième schéma d'autorisation de planification en réponse audit message d'encombrement, ledit deuxième schéma d'autorisation de planification présentant un nombre inférieur d'autorisations de planification par créneau temporel d'une liaison de communication (205) par rapport audit premier schéma d'autorisation de planification pour ledit terminal radio ;
• moyens pour transmettre ledit deuxième schéma d'autorisation de planification audit terminal radio (101 ; 201 ; 401) pour remplacer le premier schéma d'autorisation de planification.

12. Contrôleur de réseau (103 ; 203 ; 403) pour un réseau de communication adapté pour contrôler au moins un point d'accès au réseau (102 ; 202 ; 402) dudit réseau de communication, dans lequel l'au moins un point d'accès au réseau (102 ; 202 ; 402) est adapté pour établir une liaison de communication (205) avec un terminal radio (101 ; 201 ; 401), le contrôleur de réseau (103 ; 203 ; 403) étant **caractérisé en ce qu'**il comprend :
• moyens pour détecter un encombrement du trafic de données sur le support d'accès entre ledit contrôleur de réseau (103 ; 203 ; 403) et ledit coeur de réseau (104) en vérifiant si le trafic de données dudit support d'accès remplit une condition;
• moyens pour transmettre un message d'encombrement audit point d'accès au réseau (102 ; 202 ; 402) si ladite condition est remplie, dans lequel ledit message d'encombrement indique ledit terminal radio qui génère ledit encombrement du trafic de données.

13. Réseau de communication mobile comprenant une liaison de communication (205) entre un terminal radio (101, 201, 401), un point d'accès au réseau (102, 202, 402) et un contrôleur de réseau (103, 203, 403), ledit contrôleur de réseau (103 ; 203 ; 403) étant couplé à un dispositif de planification (204), ledit contrôleur de réseau étant couplé à un coeur de réseau (104) par l'intermédiaire d'un support d'accès, le réseau de communication mobile permettant d'exécuter toutes les étapes du procédé selon l'une quelconque des revendications 1 à 10 précédentes.

14. Produit de programme informatique stocké sur un support de stockage, comprenant des instructions pour l'exécution par un point d'accès au réseau (102; 202 ; 402) d'un réseau de communication, ledit point d'accès au réseau (102; 202 ; 402) est adapté pour établir une liaison de communication (205) avec un terminal radio (101 ; 201 ; 401), ledit terminal radio (101 ; 201 ; 401) étant adapté pour utiliser un premier schéma d'autorisation de planification pour ladite liaison de communication (205), **caractérisé par** des instructions pour exécuter les étapes suivantes :
• recevoir un message d'encombrement, ledit message d'encombrement indiquant ledit terminal radio qui génère ledit encombrement du trafic de données ;
• générer un deuxième schéma d'autorisation de planification en réponse audit message d'encombrement, ledit deuxième schéma d'autorisation de planification présentant un nombre inférieur d'autorisations de planification par créneau temporel d'une liaison de communication (205) par rapport à un premier schéma d'autorisation de planification pour ledit terminal radio (101 ; 201 ; 401);
• transmettre ledit deuxième schéma d'autorisation de planification audit terminal radio (101 ; 201 ; 401) pour remplacer le premier schéma d'autorisation de planification.

15. Produit de programme informatique stocké sur un support de stockage, comprenant des instructions pour l'exécution par un contrôleur de réseau (103; 203 ; 403) d'un réseau de communication, ledit contrôleur de réseau (103 ; 203; 403) étant couplé à un coeur de réseau (104) par l'intermédiaire d'un support d'accès, ledit contrôleur de réseau (103; 203; 403) étant adapté pour contrôler au moins un point d'accès au réseau (102; 202; 402), ledit point d'accès au réseau (102 ; 202 ; 402) étant adapté pour établir une liaison de communication (205) avec un terminal radio (101; 201 ; 401), **caractérisé par** des instructions pour exécuter les étapes suivantes:
• détecter un encombrement du trafic de données sur ledit support d'accès entre ledit contrôleur de réseau (103 ; 203 ; 403) et ledit coeur de réseau (104) en vérifiant si le trafic de données dudit support d'accès remplit une condition ;
• transmettre un message d'encombrement audit point d'accès au réseau (102; 202 ; 402) si ladite condition est remplie, dans lequel ledit message d'encombrement indique ledit terminal radio (101 ; 201 ; 401) qui génère ledit encombrement du trafic de données.
